(19) Europäisches Patentamt

European Patent Office

Office européen des brevets

(11) EP 0 812 545 B1

(12) **EUROPEAN PATENT SPECIFICATION**

(45) Date of publication and mention
of the grant of the patent:
**04.12.2002 Bulletin 2002/49**

(51) Int Cl.⁷: **A23L 1/052**, A23P 1/14,
A23K 1/00, A23K 1/16

(21) Application number: **96201664.8**

(22) Date of filing: **14.06.1996**

(54) **Expanded food products for human and animal consumption containing hydrocolloids and process for their preparation**

Hydrokolloide enthaltende, expandierte Nahrungs- und Futtermittel und Verfahren zur Herstellung derselben

Produits alimentaires expansés pour l'homme et les animaux contenant des hydrocolloides et procédé pour leur production

(84) Designated Contracting States:
**AT BE CH DE DK ES FI FR GB GR IE IT LI LU NL PT SE**
Designated Extension States:
**SI**

(43) Date of publication of application:
**17.12.1997 Bulletin 1997/51**

(73) Proprietor: **SOCIETE DES PRODUITS NESTLE S.A.**
**1800 Vevey (CH)**

(72) Inventors:
• Vanacker, Pascal
St.Joseph, MO 64506 (US)
• Fayard, Gilles
1066 Epalinges (CH)

• **Holz, Katrin**
**1009 Pully (CH)**
• **Best, Eric**
**Dublin, OH 43017 (US)**

(74) Representative: **Thomas, Alain**
**55, avenue Nestlé**
**1800 Vevey (CH)**

(56) References cited:
**EP-A- 0 316 145       WO-A-88/01836**
**US-A- 4 394 397       US-A- 4 517 204**
**US-A- 5 260 078**

• **DATABASE WPI Week 8940 Derwent Publications Ltd., London, GB; AN 89-288800 XP002016642 & JP-A-01 211 463 (SANEI TOKA KK) , 24 August 1989**

## Description

The invention concerns a food product for human or animal consumption made by cooker extrusion and a process for its preparation.

It is already known to prepare a food product for human or animal consumption by cooker extrusion. The problem is that if it is needed to have such a product with different physical properties, such as density, water absorption, dimension and fines, the only possibility is to change significantly the process conditions, such as type of extruder and screw profiles. Such a solution requires a great investment of time and money and is therefore not realistic. The FR patent 2500724 concerns a dry petfood comprising a binder component selected from the group consisting of carrageenan iota, carrageenan kappa, carobs and xanthans : the reason for the presence of hydrocolloïds in this system is to bind dry particles into an agglomerate, but the process is only an extrusion system and not a process of cooking extrusion. The obtained product is not expanded and presents a density comprised between 1.9 and 2.1. The process according to this patent reaches only an adhesion function, without having the opportunity of varying the product obtained.

The US Patent 5,260,078 concerns an expanded food product prepared by mixing wheat flour, water and a surfactant to make a dough, which is extruded to make an expanded food product. According to this invention, it is not an hydrocolloid but an emulsifier, which is used.

The aim of the present invention is to have the possibility of preparing a food product for human or animal consumption by cooker extrusion, having a wide scope of physical properties, without changing significantly the parameters of the process and by maintaining an industrial efficiency of the line of production.

The invention concerns a food product for animal consumption made by cooker extrusion, said product being expanded, containing between 0.1 and 3% of a hydrocolloid or a mixture thereof and having a density comprised between 100 and 1200 g/l.

The presence of hydrocolloid allows a control of density of the product at the cooker extrusion exit of the order of 15-20 % and a control of fines of the order of 20-35%: the base of comparison is the same product, produced by cooker extrusion, but without the addition of above mentioned hydrocolloids. The hydrocolloid further can decrease or increase the water absorption and gives to the naked eye a uniform visual appearance. Considering now the surface character of the final product, it is smooth and the stability against time under ambient storage exceeds two years without observable change ( no fissuring or flaking).

The type of product according to the invention include :

- Breakfast cereals and snackfoods. These are based upon barley, corn, oat, rice and wheat : either whole, milled ( meals, grits, flours ) or specific fractions of cereals (germ) and contain optional ingredients such as various sugars, malt, fats, fruits, nuts, legumes, dairyproducts (caseinate, whey), vitamins, minerals and others.

- Animals and fishfoods ( for example floating eel food). These are based upon fishmeal, wheatflour, soybean meal with optional ingredients such as fats, oils and nutritional additives. With food for fish farms, the control of density is of key importance in determining the product's ability to float, suspend or sink rapidly, depending upon the feeding habits of the particular fish species.

- Candies such as liquorice or sticks. These are based upon wheatflour, maize starch, sugars, molasses, flavors and colors.

- Other foods such as extruded brewers hops.

Hydrocolloids are substances which influence the physical properties of water in its various states and include :

- Functional soluble proteins such as gelatin, sarcoplasmics such as myosin, albumens and others,

- Gums such as galactomannans, glucomannans, exhudates and microbial preparations (xanthan, gellan),

- Gels such as seaweed extracts, pectinaceous materials and root extracts,

- Cellulosics, hemicellulosics and glucans.

The hydrocolloids are selected from the group consisting of consisting of seaweed extract such as iota carrageenan, kappa carrageenan and agar, alginate such as sodium alginate and propylene glycol alginate, furcelleran, cellulose derivatives, such as sodium carboxymethylcellulose, hydroxypropylmethylcellulose, hydroxyethylmethylcellulose, methylcellulose and hydroxyethylcellulose, galactomannan or related seed gum or seed extract, prosopis seed gum, guar, tara, locust bean gum, senna seed gum, tamarind gum, tamarind seed gum, microbial gum such as xanthan gum and gellan gum, exudate gum such as gum arabic, gum karaya, gum tragacanth, gum ghatti, glucomannan, konjac, cell wall polysaccharide, pectin, protopectin and pectate.

The amount of hydrocolloid in the product is preferably comprised between 0.5 and 1.5 % . All the percentages are given in weight (dry basis) unless otherwise specified.

Products which normally undergo expansion at, or immediately after a die or other shaping device, experience changes in the surface tension properties of the gaseous bubble. This beneficially alters the degree to which the bubble can expand before the interstitial wall partially collapses to generate porosity as the plastic phase of the extrudate solidifies. This particularly influences the longitudinal, and to a lesser degree the radial expansion of the article to create density changes.

In addition, the coalescent changes lead to a finer structure than otherwise occurs at such densities. Together with the internal textural modifications of the continuous phase of the final material, this leads to changes in elasticity and cohesiveness. Detailed appearance is also influenced.

Products therefore have greater resistance to physical damage in subsequent handling operations without becoming excessively harder. Similarly, edible products can be produced with modified eating characteristics including cohesiveness, elasticity, friability and internal structure.

The surface characteristics of the product can also be beneficially modified by the addition of hydrocolooids. This influence flow characteristics, ease of coating applications or subsequent product wetting.

The invention concerns further the process for the preparation of the above described product, wherein an aqueous phase comprising a hydrocolloid or a mixture thereof is prepared and added and mixed in a cooker extruder with the product components and the water, said mixture is heated and the product is extruded, said product having being dried to a water content of 2 to 10%. The water content at the exit of the extruder is preferably comprised between 15 and 25%, preferably between 22 and 25 %.

The first stage of the process of the invention is the preparation of the concentrated hydrocolloid. This solution has to be concentrated because excess free water adversely influences the performance of a cooker extruder. Solutions are typically produced with final concentrations ranging from 0.5 to 15%, preferably between 5 and 10 %. Specifics for preparing these solutions are given in the examples. This step is crucial to the invention, because the hydrocolloids are in their hydrated and reactive state.

Prior art has considered these materials in cooker extrusion, but to date has not incorporated them in their fully hydrated and reactive state. This has been understandable in view of the limited solvent available in typical formulations, and the great difficulties in preparing and handling very concentrated hydrocolloid solutions. However, the cooker extrusion process occurs in a relatively low moisture environment and short time frame. Results of such prior art have been negligible, inconsistent and non-effective.

Some hydrocolloids do not truly dissolve but swell and imbibe water, often at a cellular level. Such preparations are termed activated aqueous dispersions : to the layman they resemble and behave as solutions although , microscopic colloidal particles may be present.

The product components mixed are those already mentioned above in relation with the product. In the aqueous phase comprising the hydrocolloid, it is also possible to dissolve other components, for example offals, meat byproducts, colors, aromas and water soluble vitamins.

The product components are either added in an aqueous phase or in dry form. In the case of aqueous phase, the product components are preconditioned with water and steam and introduced in the cooker extruder. In the case of dry form, the product components are directly added in the cooker extruder and the addition of water and steam occurs in said cooker extruder.

Standard base formulation for cooker extruder products are used, according to published data and processes. However, the moisture in the hydrocolloid solution replaces all or some of the usual added water, or other aqueous based fluids, for example corn syrup.

Certain hydrocolloids require a counter-ion to cause junction zone formation and hence rheological modification, viscosity or gelation. In these cases, the counter-ions are added to the standard base formulation. Examples are calcium for iota-carrageenan, low methoxy pectin, gellan or alginate and potassium for kappa carrageenan or gellan.

The hydrocolloid is metered into the mixing chambers of the cooker extruder. The position of addition is less critical and can be at the preconditioner, in any of the barrel zones, or at the die, according to the specific effect desired. The addition occurs preferably at the extruder feed for energy/throughput influences, or near the die for density influences.

The hydrocolloid is added as an aqueous solution at a total hydrocolloid percentage of between 0.1 and 3% of the formula based upon a dry weight basis. The low percentage at which the effects are achieved, is the result of the form in which the hydrocolloid is added. The specific structural and other functionality aspects achieved, depends directly upon the nature and source of the particular chosen hydrocolloid.

The heating in the cooker extruder takes place at a temperature comprised between 120 and 180°C . The duration of the heating is comprised between 20 seconds and 3 minutes. The cooker extruder used can be a single or a twin-screw extruder.

The effect of adding the concentrated dissolved hydrocolloid, is to modify the structural deformation characteristics. This influences the specific mechanical energy and the specific thermal energy needs. This leads to large changes in the rheological properties of the extrudate within the barrel, according to the hydrocolloid selected, yet at quite low levels of hydrocolloid in the total formulation.

The resultant changes in the work input, permits beneficial modifications to be made to the residence time which enables enhanced feed rates and throughput. In addition, wear and tear on the cooker extruder equipment (barrel linings, screw elements) can be reduced thus giving a longer life to the equipment. This is a general result of energy savings.

A further essential feature , belonging to the product according to the invention, is the ability to influence water absorption and water solubility properties. These influence many factors including by example :

- Drown time of dry mixes for drinks,
- Soak up of milk, degree and time, by breakfast cereals,
- softening rate of snackfoods in the mouth (soak up of saliva).
- gravy absorption of dry animals,
- Floatability/sinkability of fish foods (and baits)
- level, time ease of application of coatings to candy,
- control of fermentation rates of cooker extruded products.

We give hereunder the product characterisation and the way to measure them : all the results given in the examples are compared with a reference or control without any amount of hydrocolloid, all the other parameters being kept identical. The hydrocolloid content is measured according to following qualitative testing : Flint F.O., 1990, "Microtechnique for the identification of Food Hydrocolloids", Analyst, 115,61-63.

Density

The density given in the specification is the bulk density, which is the mass of croquettes per volume unit. It was measured by weighing the mass of croquettes contained in a liter plastic cylinder (g/l).

Product thickness

At the exit of the extruder, the product thickness gives a measurement with a certain cutter speed : an increasing of the thickness means that we obtain a greater productivity.

Extrusion power

This is the power of the motor used to drive the extrusion screws. The SME (specific mechanical energy) has the same meaning, but per kg of product in the extruder. Extrusion power reduced means that we use less energy with hydrocolloid than without, for reaching the same output.

Energy to break

This is the maximum force necessary to break the pieces obtained. This measure is made with an Instron apparatus.

Water absorption index/ Water solubility index.

This physical test determines the amount of water the milled product will absorb when in contact with excess water (WAI) and the amount of dry sample solubilised in the water layer after centrifugation (WSI). These parameters give information on the behaviour of the products when in contact with a liquid as a gravy.

Extruder back pressure

This is a measure of the pressure between the screws and the motor which drives the screws. A reduction of this pressure allows to increase the output.

Pieces/kg of finished product

This is a measure of the number of pieces per kg of product, with the same size of said pieces.

The invention is further described in the following examples.

**EXAMPLE 1**

Extrudate Base Premix

| | |
|---|---|
| Whole Corn | 50% |
| Animal Protein | 30 |
| Corn Gluten (60% Protein) | 12 |
| Soy Bean (44% Protein) | 6 |
| Sodium Chloride | 2 |
| Total | 100 |

The base was prepared as a dry mix.

Hydrocolloid Solution

| | |
|---|---|
| Water | 93% |
| Iota Carrageenan | 7 |
| Total | 100 |

The hydrocolloid iota carrageenan was added to vigorously agitating 95 °C water (previously boiled to remove temporary hardness) and the mixture agitated vigorously for a further 2 minutes.

Sample Preparation and Results

Control samples were prepared to equivalent moisture additions.

The base was fed at 13.6 kg/minute via a preconditioner through a Wenger single screw cooker extruder operated at a screw speed of 400 rpm. A Wenger cutter with 6 blades was attached to the die plate. Extruded pieces were passed through a conveyor dryer to achieve 6% moisture.

(We have to add here the addition ratio between the base and the solution, together with the extrusion temperature and extrusion duration : this is also true for the other examples ).

To determine the effect upon density, the hydrocolloid was added at various dose levels and at various positions during the cooker extrusion process.

| Hydrocolloid Dose (%) | Position of Addition | Density g/l |
|---|---|---|
| 0.0 (Control) | Not applicable | 556 |
| 0.2 | Preconditioner | 513 |
| 0.2 | Just before die | 492 |
| 0.4 | Preconditioner | 442 |
| 0.4 | Extruder feed | 433 |
| 0.6 | Extruder feed | 405 |

The energy effects were determined according to hydrocolloid dose as follows:

| Hydrocolloid Dose (%) | Position of Addition | Specific Mechanical Energy |
|---|---|---|
| 0.0 (Control ) | Not applicable | 15.1 |

(continued)

| Hydrocolloid Dose (%) | Position of Addition | Specific Mechanical Energy |
|---|---|---|
| 0.2 | Preconditioner | 13.0 |
| 0.4 | Preconditioner | 12.1 |
| 0.6 | Preconditioner | 13.3 |

To evaluate the resistance of the extruded pieces to generate fines during subsequent processing and transport, pieces were shaken in a plastic box with steel balls to standard procedure, and fines percentage measured by sieves. Fines means here particles having a particle size of less than 1 mm.

| Sample | Fines (%) |
|---|---|
| Control | 4.8 |
| 0.2% hydrocolloid | 3.6 |

The last result corresponds to the average of three different measures.

**EXAMPLE 2**

Hydrocolloid Solution

| Water | 95% |
|---|---|
| High Guluronic Acid Sodium Alginate | 5 |
| Total | $\overline{100}$ |

The water was heated to 90-95 °C then agitated with a mixer to create a steep sided vortex. The hydrocolloid alginate was sprinkled slowly onto the side wall of the vortex. Agitation was continued for 30 minutes and the solution adjusted to 70 °C.

Sample Preparation and Results

Control samples were prepared to equivalent moisture additions.

Calcium sulfate was added to the base at a level equivalent to 0.14 times the hydrocolloid concentration in the final product. The base was fed at 16.5 kg/hour via a Clextral co-rotating twin screw cooker extruder operated at a screw speed of 450 rpm. A Clextral cutter with 2 blades was attached to the die plate. Extruded pieces were dried at 120 °C for 8 minutes and then cooled for 5 minutes.

Some of the benefits may be exemplified as follows:

1% addition of the hydrocolloid had the following affects:

Extrusion power reduced by 24%
Extrusion back pressure reduced by 21 %
Density reduced by 18%
Energy required to break piece increased by 18%

0.3% addition of the hydrocolloid had the following affects:

Extruder back pressure reduced by 28 %
Extrusion power reduced by 23%
Water absorption index reduced by 8%
Water solubility index reduced by 7%
Broken pieces (<1mm after fines generation test see example 1) reduced by 4%.

## EXAMPLE 3

Hydrocolloid Solution

| Water | 95% |
|---|---|
| Propylene Glycol Alginate | 5 |
| Total | 100 |

The water was heated to 75-80 °C then agitated with a mixer to create a steep sided vortex. The hydrocolloid propylene glycol alginate was added quickly onto the side wall of the vortex. Agitation was continued for 15 minutes and the solution adjusted to 70 °C.

Sample Preparation and Results

Control samples were prepared to equivalent moisture additions.

The base was fed at 16.5 kg/hour via a Clextral co-rotating twin screw cooker extruder operated at a screw speed of 450 rpm. A Clextral cutter with 2 blades was attached to the die plate. Extruded pieces were dried at 120 °C for 8 minutes and then cooled for 5 minutes.

Some of the benefits may be exemplified as follows:

1% addition of the hydrocolloid had the following affects:

Energy required to break piece increased by 41%
Broken pieces (<1mm after fines generation test see example 1) reduced by 36%
Water solubility index reduced by 33%
Extrusion power reduced by 18%
Density increased by 12%
Water absorption index reduced by 10%

0.3% addition of the hydrocolloid had the following affects:

Broken pieces (<1mm after fines generation test see example 1) reduced by 28%
Water solubility index reduced by 16%
Extrusion power reduced by 13%
Extrusion back pressure reduced by 11 %
Water absorption index reduced by 9%

## EXAMPLE 4

Hydrocolloid Solution

| Water | 95% |
|---|---|
| Iota Carrageenan | 5 |
| Total | 100 |

The water was heated to 95 °C and maintained at this temperature throughout addition. Agitation was with a mixer to create a steep sided vortex. The hydrocolloid iota carrageenan was added onto the side wall of the vortex. Agitation was continued for 2 minutes and the solution adjusted to 80 °C.

Sample Preparation and Results

Control samples were prepared to equivalent moisture additions.

The base was fed at 16.5 kg/hour via a Clextral co-rotating twin screw cooker extruder operated at a screw speed of 450 rpm. A Clextral cutter with 2 blades was attached to the die plate. Extruded pieces were dried at 120 °C for 8 minutes and then cooled for 5 minutes.

Some of the benefits may be exemplified as follows:

1% addition of the hydrocolloid had the following affects:

Extrusion power reduced by 35%
Extruder back pressure reduced by 28 %
Energy required to break piece reduced by 20%
Pieces/kg of finished product increased by 19%
Water absorption index reduced by 10%
Water solubility index reduced by 9%

0.3% addition of the hydrocolloid had the following affects:

Extruder back pressure reduced by 31 %
Extrusion power reduced by 23%
Water solubility index reduced by 9%
Pieces/kg of finished product increased by 8%
Energy required to break piece reduced by 8%

**EXAMPLE 5**

Hydrocolloid Solution

| Water | 95% |
|---|---|
| Methyl Cellulose | 5 |
| Total | $\overline{100}$ |

Half the quantity of water was heated to 60 °C and agitated with a mixer to create a steep sided vortex. The hydrocolloid methyl cellulose was added slowly in a fine stream onto the side wall of the vortex. The remaining water was added as ground ice to achieve a cold solution. Agitation time was 2 minutes and the solution was pumped at 67 °C.

Sample Preparation and Results

Control samples were prepared to equivalent moisture additions.
The base was fed at 16.5 kg/hour via a Clextral co-rotating twin screw cooker extruder operated at a screw speed of 450 rpm. A Clextral cutter with 2 blades was attached to the die plate. Extruded pieces were dried at 120 °C for 8 minutes and then cooled for 5 minutes.
Some of the benefits may be exemplified as follows:

1% addition of the hydrocolloid had the following affects:

Broken pieces (<1mm after fines generation test see example 1) reduced by 20%
Extruder back pressure reduced by 20 %
Extrusion power reduced by 13%
Density increased by 9%
Energy required to break piece reduced by 7%
Water absorption index reduced by 5%

0.3% addition of the hydrocolloid had the following affects:

Extruder back pressure reduced by 17 %
Extrusion power reduced by 11%
Broken pieces (<1mm after fines generation test see example 1) reduced by 10%

Product thickness increased by 8 %
Energy required to break piece reduced by 6%

**EXAMPLE 6**

Hydrocolloid Solution

| Water | 95% |
|---|---|
| Sodium Carboxymethyl Cellulose | 5 |
| Total | 100 |

The water was at 25 °C and agitated with a mixer to create a steep sided vortex. The hydrocolloid sodium carboxymethyl cellulose was added onto the side wall of the vortex. Agitation time was 5 minutes and the solution was pumped at 25 °C.

Sample Preparation and Results

Control samples were prepared to equivalent moisture additions.
The base was fed at 16.5 kg/hour via a Clextral co-rotating twin screw cooker extruder operated at a screw speed of 450 rpm. A Clextral cutter with 2 blades was attached to the die plate. Extruded pieces were dried at 120 °C for 8 minutes and then cooled for 5 minutes. Some of the benefits may be exemplified as follows:

1% addition of the hydrocolloid had the following affects:

Broken pieces (<1mm after fines generation test see example 1) reduced by 35%
Water absorption index increased by 7%
Extrusion power reduced by 5%

0.3% addition of the hydrocolloid had the following affects:

Water solubility index reduced by 9%
Density reduced by 7%
Extruder back pressure increased by 7 %
Water absorption index increased by 7%

**EXAMPLE 7**

Hydrocolloid Solution

| Water | 95% |
|---|---|
| Microcrystalline Alpha Cellulose Gel | 5 |
| Total | 100 |

The water was at 18 °C and agitated with a mixer to create a steep sided vortex. The hydrocolloid microcrystalline alpha cellulose gel was added in a fine stream onto the side wall of the vortex. Agitation was continuous throughout pumping, as this material swells to form an activated aqueous dispersion.

Sample Preparation and Results

Control samples were prepared to equivalent moisture additions.
The base was fed at 16.5 kg/hour via a Clextral co-rotating twin screw cooker extruder operated at a screw speed of 450 rpm. A Clextral cutter with 2 blades was attached to the die plate. Extruded pieces were dried at 120 °C for 8 minutes and then cooled for 5 minutes.

Some of the benefits may be exemplified as follows:

1% addition of the hydrocolloid had the following affects:

Energy required to break piece reduced by 24%
Extruder back pressure reduced by 21 %
Water solubility index reduced by 6%
5 Water absorption index reduced by 5%

0.3% addition of the hydrocolloid had the following affects:

Thickness increased by 17 %
Extruder back pressure reduced by 17 %
Pieces/kg of finished product increased by 13%
Extrusion power reduced by 10%
Energy required to break piece reduced by 5%

**EXAMPLE 8**

Hydrocolloid Solution

| Water | 95% |
|---|---|
| Prosopis Mesquite Seed Gum | 5 |
| Total | 100 |

The water was at 65 °C and agitated with a mixer to create a steep sided vortex. The hydrocolloid prosopis mesquite seed gum was added in a fine stream onto the side wall of the vortex. Agitation time was 5 minutes and the product was pumped at 58 °C.

Sample Preparation and Results

Control samples were prepared to equivalent moisture additions.
The base was fed at 16.5 kg/hour via a Clextral co-rotating twin screw cooker extruder operated at a screw speed of 450 rpm. A Clextral cutter with 2 blades was attached to the die plate. Extruded pieces were dried at 120 °C for 8 minutes and then cooled for 5 minutes.
Some of the benefits may be exemplified as follows:

1% addition of the hydrocolloid had the following affects:

Extrusion power reduced by 26%
Broken pieces (<1mm after fines generation test see example 1) reduced by 25%
Extruder back pressure reduced by 22 %
Thickness increased by 15 %
Water absorption index reduced by 5%

0.3% addition of the hydrocolloid had the following affects:

Extruder back pressure reduced by 37 %
Extrusion power reduced by 29%

**EXAMPLE 9**

Hydrocolloid Solution

| | |
|---|---|
| Water | 95% |
| Propylene Glycol Alginate | 2.5 |
| High Guluronic Acid Sodium Alginate | 2.5 |
| Total | 100 |

The water was at 85 °C and agitated with a mixer to create a steep sided vortex. The hydrocolloid propylene glycol alginate was added onto the side wall of the vortex. Agitation time was 15 minutes. The hydrocolloid high guluronic acid sodium alginate was added in a fine stream onto the side wall of the vortex and agitation continued for a further 30 minutes. The product was pumped at 75 °C.

Sample Preparation and Results

Control samples were prepared to equivalent moisture additions.
Calcium sulfate was added to the base at a level equivalent to 0.14 times the high guluronic acid alginate concentration in the final product. The base was fed at 16.5 kg/hour via a Clextral co-rotating twin screw cooker extruder operated at a screw speed of 450 rpm. A Clextral cutter with 2 blades was attached to the die plate. Extruded pieces were dried at 120 °C for 8 minutes and then cooled for 5 minutes.
Some of the benefits may be exemplified as follows:

1% addition of the hydrocolloid mixture had the following affects:

Energy required to break piece increased by 28%
Extruder back pressure increased by 20 %
Broken pieces (<1mm after fines generation test see example 1) reduced by 15%
Extrusion power reduced by 14%
Density reduced by 6%
Water absorption index reduced by 5%

0.3% addition of the hydrocolloid mixture had the following affects:

Extrusion power reduced by 25%
Extruder back pressure reduced by 25 %
Broken pieces (<1mm after fines generation test see example 1) reduced by 19%
Water solubility index reduced by 15%
Energy required to break piece increased by 8%

**EXAMPLE 10**

Hydrocolloid Solution

| | |
|---|---|
| Water | 95 % |
| Kappa Carrageenan | 2.5 |
| Cassia Gum | 2.5 |
| Total | 100 |

The water was at 95 °C and agitated with a mixer to create a steep sided vortex. The hydrocolloid kappa carrageenan was added onto the side wall of the vortex. Agitation time was 2 minutes. The hydrocolloid cassia gum was added in a fine stream onto the side wall of the vortex and agitation continued for a further 10 minutes. The product was pumped at 80 °C.

Sample Preparation and Results

Control samples were prepared to equivalent moisture additions.
Potassium chloride was added to the base at a level equivalent to 0.7 times the kappa carrageenan concentration in the final product. The base was fed at 16.5 kg/hour via a Clextral co-rotating twin screw cooker extruder operated at a screw speed of 450 rpm. A Clextral cutter with 2 blades was attached to the die plate. Extruded pieces were dried at 120 °C for 8 minutes and then cooled for 5 minutes.
Some of the benefits may be exemplified as follows:

1% addition of the hydrocolloid mixture had the following affects:

Extruder back pressure reduced by 20 %
Extrusion power reduced by 19%
Thickness increased by 9 %
Water solubility index reduced by 8%
Broken pieces (<1mm after fines generation test see example 1) reduced by 7%
Pieces/kg of feed increased by 6%
Density increased by 3%

0.3% addition of the hydrocolloid mixture had the following affects:

Extrusion power reduced by 24%
Extruder back pressure reduced by 21 %
Energy required to break piece increased by 12%
Broken pieces (<lmm after fines generation test see example 1) reduced by 10%
Water solubility index reduced by 10%

**EXAMPLE 11**

Hydrocolloid Solution

| Water | 95% |
|---|---|
| Microcrystalline Alpha Cellulose Gel | 3 |
| Sodium Carboxymethyl Cellulose | 2 |
| Total | 100 |

The water was at 25 °C and agitated with a mixer to create a steep sided vortex. The hydrocolloid microcrystalline alpha cellulose gel was added onto the side wall of the vortex. Agitation time was 2 minutes. The hydrocolloid sodium carboxymethyl cellulose was added in a fine stream onto the side wall of the vortex and agitation continued for a further 5 minutes. The product was pumped at 24 °C.

Sample Preparation and Results

Control samples were prepared to equivalent moisture additions.
The base was fed at 16.5 kg/hour via a Clextral co-rotating twin screw cooker extruder operated at a screw speed of 450 rpm. A Clextral cutter with 2 blades was attached to the die plate. Extruded pieces were dried at 120 °C for 8 minutes and then cooled for 5 minutes.
Some of the benefits may be exemplified as follows:

1% addition of the hydrocolloid mixture had the following affects:

Broken pieces (<1mm after fines generation test see example 1) reduced by 30%
Extrusion power reduced by 13%

**EP 0 812 545 B1**

Extruder back pressure reduced by 13 %
Water solubility index reduced by 11%
Energy required to break piece increased by 10%
Density increased by 5%
Thickness increased by 4 %

0.3% addition of the hydrocolloid mixture had the following affects:

Broken pieces (<lmm after fines generation test see example 1) increased by 44%
Energy required to break piece reduced by 17%
Thickness increased by 7 %
Density reduced by 5%

## Claims

1. A food product for human or animal consumption made by cooker extrusion, said product being expanded, containing between 0.1 and 3% of a hydrocolloid or a mixture thereof, having a density comprised between 100 and 1200 g/l and a water content of 2 to 10% and said hydrocolloïd being used in fully hydrated and reactive state.

2. A food product according to claim 1, wherein the amount of hydrocolloid is comprised between 0.5 and 1.5%.

3. A food product according to any of claims 1 or 2, wherein the hydrocolloid is selected from the group consisting of seaweed extract such as iota carrageenan, kappa carrageenan and agar, alginate such as sodium alginate and propylene glycol alginate, furcelleran, cellulose derivatives, such as sodium carboxymethylcellulose, hydroxypropylmethylcellulose, hydroxyethylmethylcellulose, methylcellulose and hydroxyethylcellulose, galactomannan or related seed gum or seed extract, prosopis seed gum, guar, tara, locust bean gum, senna seed gum, tamarind gum, tamarind seed gum, microbial gum such as xanthan gum and gellan gum, exudate gum such as gum arabic, gum karaya, gum tragacanth, gum ghatti, glucomannan, konjac, cell wall polysaccharide, pectin, protopectin and pectate.

4. A process for the preparation of a food product according to any of claims 1 to 3, wherein an aqueous phase comprising a hydrocolloid or a mixture thereof is prepared and added and mixed in a cooker extruder with the product components and the water, said mixture is heated and the product is extruded, said product being dried to a water content of 2 to 10%.

5. A process according to claim 4, wherein the heating in the cooker extruder takes place at a temperature comprised between 120 and 180°C.

6. A process according to any of claims 4 or 5, wherein the extrusion takes place during 20 seconds to 3 minutes.

7. A process according to any of claims 4 to 6, wherein the hydocolloid is selected from the group consisting of seaweed extract such as iota carrageenan, kappa carrageenan and agar, alginate such as sodium alginate and propylene glycol alginate, furcelleran, cellulose derivatives, such as sodium carboxymethylcellulose, hydroxypropylmethylcellulose, hydroxyethylmethylcellulose, methylcellulose and hydroxyethylcellulose, galactomannan or related seed gum or seed extract, prosopis seed gum, guar, tara, locust bean gum, senna seed gum, tamarind gum, tamarind seed gum, microbial gum such as xanthan gum and gellan gum, exudate gum, such as gum arabic, gum karaya, gum tragacanth, gum ghatti, glucomannan, konjac, cell wall polysaccharide, pectin, protopectin and pectate.

8. A process according to claims 4 to 7, wherein the cooker extruder is a single or a twin screw extruder.

9. A process according to claims 4 to 8, wherein the aqueous phase contains between 0.5 and 15 % hydrocolloid.

10. A process according to claim 9, wherein the aqueous phase contains between 5 and 10 % hydrocolloid.

**EP 0 812 545 B1**

**Patentansprüche**

1. Nahrungsmittelprodukt für den menschlichen oder tierischen Verzehr, das durch Kochextrusion hergestellt ist, wobei das genannte Produkt expandiert ist, zwischen 0,1 und 3% eines Hydrokolloids oder einer Mischung daraus enthält, eine Dichte zwischen 100 und 1200 g/l sowie einen Wassergehalt von 2 bis 10% aufweist und bei dem das Hydrokolloid in einem vollständig hydratisierten und reaktiven Zustand verwendet wird.

2. Nahrungsmittelprodukt nach Anspruch 1, bei dem die Menge des Hydrokolloids zwischen 0,5 und 1,5% liegt.

3. Nahrungsmittelprodukt nach Anspruch 1 oder 2, wobei das Hydrokolloid aus der Gruppe ausgewählt ist, die besteht aus einem Seetangextrakt wie beispielsweise iota-Carrageenan, kappa-Carrageenan und Agar, einem Alginat wie Natriumalginat und Propylenglycolalginat, Furcelleran, einem Cellulosederivat wie Natriumcarboxymethylcellulose, Hydroxypropylmethylcellulose, Hydroxyethylmethylcellulose, Methylcellulose und Hydroxyethylcellulose, einem Galactomannan oder verwandten Samengummi oder Samenextrakt, Prosopissamen-Gummi, Guar-, Tara-, Johannisbrot-Kernmehl, Sennasamen-Gummi, Tamarindengummi, Tamarindensamen-Gummi, einem mikrobiellen Gummi wie Xanthangummi und Gellangummi, Exsudatgummmi wie Gummi arabicum, Karayagummi, Traganth, Ghattigummi, Glucomannan, Konjak, einem Zellwandpolysaccharid, Pectin, Protopectin und Pectat.

4. Herstellung eines Nahrungsmittelprodukts nach irgendeinem der Ansprüche 1 bis 3, bei dem eine wäßrige Phase, die ein Hydrokolloid oder eine Mischung davon umfaßt, hergestellt wird und in einem Kochextruder den Produktbestandteilen und dem Wasser zugesetzt und damit vermischt wird, wobei die genannte Mischung erhitzt wird und das Produkt extrudiert wird, wobei das Produkt auf einen Wassergehalt von 2 bis 10% getrocknet wird.

5. Verfahren nach Anspruch 4, bei dem das Erhitzen im Kochextruder bei einer Temperatur erfolgt, die zwischen 120 und 180°C liegt.

6. Verfahren nach irgendeinem der Ansprüche 4 oder 5, bei dem die Extrusion innerhalb von 20 Sekunden bis 3 Minuten erfolgt.

7. Verfahren nach irgendeinem der Ansprüche 4 bis 6, wobei das Hydrokolloid aus der Gruppe ausgewählt ist, die besteht aus einem Seetangextrakt wie beispielsweise iota-Carrageenan, kappa-Carrageenan und Agar, einem Alginat wie Natriumalginat und Propylenglycolalginat, Furcelleran, einem Cellulosederivat wie Natriumcarboxymethylcellulose, Hydroxypropylmethylcellulose, Hydroxyethylmethylcellulose, Methylcellulose und Hydroxyethylcellulose, einem Galactomannan oder verwandten Samengummi oder Samenextrakt, Prosopissamen-Gummi, Guar-, Tara-, Johannisbrot-Kernmehl, Sennasamen-Gummi, Tamarindengummi, Tamarindensamen-Gummi, einem mikrobiellen Gummi wie Xanthangummi und Gellangummi, Exsudatgummmi wie Gummi arabicum, Karayagummi, Traganth, Ghattigummi, Glucomannan, Konjak, einem Zellwandpolysaccharid, Pectin, Protopectin und Pectat.

8. Verfahren nach den Ansprüchen 4 bis 7, bei dem der Kochextruder ein Einschnecken- oder Zweischnecken-Extruder ist.

9. Verfahren nach den Ansprüche 4 bis 8, bei dem die wäßrige Phase zwischen 0,5 und 15% Hydrokolloid enthält.

10. Verfahren nach Anspruch 9, bei dem die wäßrige Phase zwischen 5 und 10% Hydrokolloid enthält.


**Revendications**

1. Produit alimentaire destiné à la consommation par l'homme ou des animaux, préparé par extrusion en cuiseur, ledit produit étant expansé, contenant 0,1 à 3 % d'un hydrocolloïde ou d'un mélange d'hydrocolloïdes, ayant une masse volumique comprise dans l'intervalle de 100 à 1200 g/l et une teneur en eau de 2 à 10 %, ledit hydrocolloïde étant utilisé à l'état totalement hydraté et réactif.

2. Produit alimentaire suivant la revendication 1, dans lequel la quantité d'hydrocolloïde est comprise dans l'intervalle de 0,5 à 1,5 %.

3. Produit alimentaire suivant l'une quelconque des revendications 1 et 2, dans lequel l'hydrocolloïde est choisi dans le groupe consistant en un extrait d'algues tel que la iota-carraghénine, la kappa-carraghénine et la gélose, un alginate tel que l'alginate de sodium et l'alginate de propylèneglycol, le furcellarane, des dérivés de cellulose tels que la carboxyméthylcellulose sodique, l'hydroxypropylméthylcellulose, l'hydroxyéthylméthylcellulose, la méthylcellulose et l'hydroxyéthylcellulose, un galactomannane ou une gomme de graines apparentée ou un extrait de graines, la gomme de graines de prosopis, la gomme guar, la gomme tara, la gomme de caroube, la gomme de graines de séné, la gomme de tamarinier, la gomme de graines de tamarinier, une gomme microbienne telle que la gomme xanthane et la gomme gellane, une gomme d'exsudat telle que la gomme arabique, la gomme karaya, la gomme adragante, la gomme ghatti, un glucomannane, la gomme konjac, un polysaccharide de parois cellulaires, la pectine, la protopectine et un pectate.

4. Procédé pour la préparation d'un produit alimentaire suivant l'une quelconque des revendications 1 à 3, dans lequel une phase aqueuse comprenant un hydrocolloïde ou un mélange d'hydrocolloïdes est préparée, ajoutée et mélangé dans un appareil d'extrusion - cuisson avec les constituants du produit et l'eau, ledit mélange est chauffé et le produit est extrudé, ledit produit étant séché à une teneur en eau de 2 à 10 %.

5. Procédé suivant la revendication 4, dans lequel le chauffage dans l'appareil d'extrusion - cuisson est effectué à une température comprise dans l'intervalle de 120 à 180°C.

6. Procédé suivant l'une quelconque des revendications 4 et 5, dans lequel l'extrusion est effectuée pendant un temps de 20 secondes à 3 minutes.

7. Procédé suivant l'une quelconque des revendications 4 à 6, dans lequel l'hydrocolloïde est choisi dans le groupe consistant en un extrait d'algues tel que la iota-carraghénine, la kappa-carraghénine et la gélose, un alginate tel que l'alginate de sodium et l'alginate de propylèneglycol, le furcellarane, des dérivés de cellulose tels que la carboxyméthylcellulose sodique, l'hydroxypropylméthylcellulose, l'hydroxyéthylméthylcellulose, la méthylcellulose et l'hydroxyéthylcellulose, un galactomannane ou une gomme de graines apparentée ou un extrait de graines, la gomme de graines de prosopis, la gomme guar, la gomme tara, la gomme de caroube, la gomme de graines de séné, la gomme de tamarinier, la gomme de graines de tamarinier, une gomme microbienne telle que la gomme xanthane et la gomme gellane, une gomme d'exsudat telle que la gomme arabique, la gomme karaya, la gomme adragante, la gomme ghatti, un glucomannane, la gomme konjac, un polysaccharide de parois cellulaires, la pectine, la protopectine et un pectate.

8. Procédé suivant les revendications 4 à 7, dans lequel l'appareil d'extrusion - cuisson consiste en une extrudeuse à une vis ou une extrudeuse à deux vis.

9. Procédé suivant les revendications 4 à 8, dans lequel la phase aqueuse contient 0,5 à 15 % d'hydrocolloïde.

10. Procédé suivant la revendication 9, dans lequel la phase aqueuse contient 5 à 10 % d'hydrocolloïde.